# EUROPÄISCHE PATENTSCHRIFT

(11) **EP 2 834 533 B1**
(45) Veröffentlichungstag und Bekanntmachung des Hinweises auf die Patenterteilung: **28.09.2016**
(21) Anmeldenummer: 13713424.3
(22) Anmeldetag: 28.03.2013
(51) Int. Cl.: F16D 65/12

(54) **BREMSSCHEIBENANORDNUNG FÜR SCHEIBENBREMSEN**
BRAKE DISC ARRANGEMENT FOR DISC BRAKES
SYSTÈME DE DISQUE DE FREIN POUR FREINS À DISQUE

(30) Priorität: 03.04.2012 DE 102012205410
(43) Veröffentlichungstag der Anmeldung: 11.02.2015
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2013/056651
(87) Internationale Veröffentlichungsnummer: WO 2013/149928

(56) Entgegenhaltungen:
- EP-A1- 0 014 483
- EP-A2- 1 227 261
- DE-A1-102008 035 750

## Beschreibung

Die vorliegende Erfindung betrifft eine Bremsscheibenanordnung für Scheibenbremsen, beispielsweise von Landfahrzeugen (wie Personenkraftwagen, Lastkraftwagen, Nutzfahrzeugen oder Anhängern) sowie ein Verfahren zur Herstellung einer Bremsscheibenanordnung für Scheibenbremsen, ebenfalls insbesondere für Landfahrzeuge.

Bremsscheibenanordnungen der in Rede stehenden Art sind aus dem Stand der Technik hinlänglich bekannt. Sie weisen meist eine einteilige Ausführungsform auf, welche aus einem Reibring und einem Anbindungsadapter gebildet wird. Unter dem Reibring wird dabei die eigentliche Bremsscheibe verstanden, welche der Erzielung der Bremswirkung über entsprechende Bremsklötze dient, der Anbindungsadapter wiederum ist dazu vorgesehen, den Reibring mit der Radnabe etc. zu verbinden. Bei bekannten Ausführungen wird der Reibring auf den Anbindungsadapter derart gegossen, dass sich der Reibring radial ausdehnen und somit ein Aufschirmen des Reibrings vermieden werden kann, beispielsweise wenn dieser starken Temperaturschwankungen unterlegen ist. Bei weiteren bekannten Ausführungsformen sind zwischen dem Reibring und dem Anbindungsadapter zusätzliche Verbindungselemente angeordnet, auf welche der Reibring und der Anbindungsadapter gegossen werden. Aufgrund des aufwendigen Herstellungsprozesses müssen derartige Bremsscheibenanordnungen allerdings nachbearbeitet werden, wobei die Gefahr besteht, dass durch diese Bearbeitung Kerben entstehen, die in kritischen Bereichen liegen. Zudem erhöht dieser Verfahrensschritt die Produktionskosten. Weiter sind derartige Bremsscheibenanordnungen auf gießtechnische Herstellungsverfahren beschränkt, welche aufgrund der Komplexität des Bauteils und seiner sicherheitsrelevanten Eigenschaften äußerst schwer zu führen sind.

Dokument EP 1 227 261 A2 offenbart eine Bremsscheibenanordnung mit einem Reibring, einem Anbindungsadapter und zumindest einem Verbindungselement zur Verbindung von Reibring und Anbindungsadapter.

Es ist somit Aufgabe der vorliegenden Erfindung, eine Bremsscheibenanordnung für Scheibenbremsen, insbesondere für Landfahrzeuge, sowie ein Verfahren zur Herstellung einer Bremsscheibenanordnung für Scheibenbremsen, insbesondere für Landfahrzeuge, vorzusehen, mittels welchen die Betriebssicherheit der Bremsscheibenanordnung verbessert und der Produktionsprozess vereinfacht sowie Produktionskosten verringert werden können.

Diese Aufgabe wird gelöst durch eine Bremsscheibenanordnung für Scheibenbremsen, insbesondere für Landfahrzeuge, gemäß Anspruch 1 sowie durch ein Verfahren zu Herstellung einer Bremsscheibenanordnung für Scheibenbremsen, insbesondere für Landfahrzeuge, mit den Merkmalen des Anspruchs 11. Weitere Vorteile und Merkmale der Erfindung ergeben sich aus den Unteransprüchen sowie der Beschreibung und den beigefügten Figuren.

Erfindungsgemäß umfasst die Bremsscheibenanordnung für Scheibenbremsen, insbesondere für Landfahrzeuge, einen Reibring, einen Anbindungsadapter zur Anbindung der Bremsscheibenanordnung an eine Radnabe, zumindest ein Verbindungselement zur Verbindung von Reibring und Anbindungsadapter und zumindest eine Kontur, welche einen reibringseitigen und einen adapterseitigen Konturbereich aufweist, indem die Kontur entlang einer Längsachse durch quer zu einer Rotationsachse der Bremsscheibenanordnung verlaufende Rücksprünge im Reibring und im Anbindungsadapter geformt ist, wobei das Verbindungselement von einem ersten in einen zweiten Zustand bringbar ist, wobei das Verbindungselement im ersten Zustand derart ausgebildet ist, dass es innerhalb der Kontur anordenbar ist und wobei der Außendurchmesser des Verbindungselements im zweiten Zustand zumindest bereichsweise derart quer zur Längsachse gegenüber dem ersten Zustand vergrößert ist, dass das Verbindungselement mit dem reibringseitigen und/oder mit dem adapterseitigen Konturbereich form- und/oder kraftschlüssig verbunden ist. Die Bremsscheibenanordnung dient insbesondere der Anordnung an Landfahrzeugen, wie beispielsweise PKW, LKW, Anhänger, Züge oder Ähnlichem, soll jedoch nicht auf die vorgenannte Aufzählung beschränkt sein. Besonders zweckmäßigerweise ist die Bremsscheibenanordnung für ein Nutzfahrzeug vorgesehen. Die Bremsscheibenanordnung ist ausgelegt, mit dem Rad oder einer Radnabe mittelbar oder unmittelbar befestigt zu werden, sodass diese mit dem Rad umläuft. An den Reibring können zum Abbremsen des Rades von beiden Seiten Bremsbeläge gepresst werden, welche in einem Bremssattel vorgesehen sind, der den Reibring umspannt. Der Reibring kann bevorzugt massiv (das heißt ohne Belüftungskanäle bzw. Zirkulationsraum) ausgeführt sein oder besonders bevorzugt als innen belüfteter Reibring (mit Zirkulationsraum bzw. Belüftungskammer). Weiterhin bevorzugt weist die Bremsscheibenanordnung einen Anbindungsadapter auf, welcher ausgelegt ist, die Bremsscheibenanordnung an einer Radnabe festzulegen. Die Anbindung kann hierbei mittelbar über zwischengeschaltete Elemente oder unmittelbar an die Radnabe erfolgen. Es versteht sich, dass der Anbindungsadapter einen topfförmigen Abschnitt aufweisen kann, welcher mit dem Rad oder der Radnabe verbindbar ist. Die eigentliche Verbindung des Reibrings und des Anbindungsadapters ist bevorzugt durch das Verbindungselement darstellbar. Bevorzugt ist das Verbindungselement als einseitig verschlossener Hohlbolzen ausführbar, wobei radial um die Rotationsachse bevorzugt 8 bis 12 Verbindungselemente, besonders bevorzugt 10 Verbindungselemente vorgesehen sind. Bevorzugt liegen die Verbindungselemente in einer Ebene quer zur Rotationsachse, wobei deren Anordnung in der Ebene bevorzugt unregelmäßig, besonders bevorzugt regelmäßig erfolgt. Ganz besonders bevorzugt erfolgt die Anordnung konzentrisch und radial zur Rotationsachse umfänglich regelmäßig verteilt. In weiteren bevorzugten Ausführungsformen kann auch zumindest ein Verbindungselement einen Versatz zu dieser Ebene in Richtung der Rotationsachse aufweisen. Bevorzugt verläuft weiterhin die Längsachse, in deren Richtung sich das Verbindungselement erstreckt in radialer Richtung zur Rotationsachse. Ebenfalls bevorzugt kann der Verlauf der Längsachse auch schräg zur Rotationsachse sein. Die Kontur, in welcher das Verbindungselement anordenbar ist, ist bevorzugt durch den reibringseitigen und den adapterseitigen Konturbereich bildbar. Die quer zur Rotationsachse verlaufenden Rücksprünge im reibringseitigen und im adapterseitigen Konturbereich sind bevorzugt als Öffnungen mit einer länglichen Erstreckung in Richtung der quer zur Rotationsachse verlaufenden Längsachse ausführbar. Es versteht sich, dass der reibringseitige und der adapterseitige Konturbereich so geformt sind, dass beispielsweise die Bremsfunktionalität des Reibrings nicht negativ beeinflusst wird. Es versteht sich, dass Anzahl und Anordnung der Konturen der Anzahl und der Anordnung der Verbindungselemente entspricht. Vorteilhafterweise weist das Verbindungselement zwei Zustände auf, wobei der erste Zustand derart ausgebildet ist, dass das Verbindungselement in der Kontur anordenbar ist. Mit anderen Worten ist das Verbindungselement also händisch oder mit Hilfe eines geeigneten Verfahrens und/oder einer geeigneten Vorrichtung im ersten Zustand in der Kontur anordenbar. Über das Aufbringen eines Innendrucks innerhalb des Verbindungselements ist das Verbindungselement bzw. dessen Außengeometrie aufweitbar, wodurch der Formund/oder Kraftschluss mit der Kontur herstellbar ist und das Verbindungselement sich in seinem zweiten Zustand befindet. Bevorzugte Techniken sind hierfür beispielsweise das Innenhochdruckumformverfahren oder das hydromechanische Tiefziehen. Von großem Vorteil ist das niedrige Temperaturniveau bei diesem Umformprozess, welches deutlich unter dem Temperaturniveau bei gießtechnischen Fertigungsverfahren liegt. Damit ist die Gefahr verringert, anliegende bzw. umliegende Bauteile im Fertigungsprozess der Bremsscheibenanordnung negativ zu beeinflussen, beispielsweise einen Temperaturverzug herzustellen. Weiterhin von großem Vorteil ist es, dass der Reibring und der Anbindungsadapter nicht um das Verbindungselement gegossen werden müssen, da das Verbindungselement aufgrund der Möglichkeit des Vorhandenseins von zwei Zuständen in der im Reibring und dem Anbindungsadapter gebildeten Kontur anordenbar ist. Damit ergeben sich zusätzlich neue Freiheitsgrade bei der Materialauswahl für die Herstellung des Reibrings und des Anbindungsadapters, beispielsweise auch aus Nicht-Gusswerkstoffen. Bevorzugte Bremsscheibenanordnungen können sowohl vor dem Umformprozess des Verbindungselements als auch danach komplett fertig bearbeitet werden. Bevorzugte Materialien für das Verbindungselement sind hochfeste VA-Stähle, da VA-Stahl zum einen eine gute Korrosionsbeständigkeit aufweist und zum anderen einen hohen Verformungsgrad bietet. Von großem Vorteil ist es, dass der Reibring und der Anbindungsadapter komplett separat und unabhängig voneinander fertigbar sind. Daraus folgt weiterhin eine große Form- und Materialvielfalt. Bevorzugte Reibringwerkstoffe sind Guss- sowie Keramik- und Verbundwerkstoffe. Besonders bevorzugt sind der Reibring und/oder der Anbindungsadapter aus Sphäroguss herstellbar.

Zweckmäßigerweise ist der Querschnitt der Kontur rund und/oder entlang der Längsachse konstant ausgebildet. Bevorzugte Geometrien sind derart gestaltet, dass ein guter Form- und/oder Kraftschluss mit dem Verbindungselement herstellbar ist. Bevorzugt ist der Querschnitt der Kontur auch eckig oder spitzig ausführbar. Weiterhin bevorzugt ist die Kontur entlang der Längsachse bzw. quer zur Rotationsachse der Bremsscheibenanordnung auch nicht konstant ausgebildet bzw. nur bereichsweise konstant. Bevorzugte Ausführungsformen sind beispielsweise sich konisch aufweitend bzw. zulaufend entlang der Längsachse ausgebildet. Bevorzugt ist auch eine abwechselnde Zu- und/oder Abnahme des Innendurchmessers der Kontur entlang der Längsachse. Weiterhin bevorzugt sind die Kontur bzw. der adapterseitige und/oder der reibseitige Konturbereich derart ausgebildet, dass eine gute axiale Verschiebbarkeit des Verbindungselements in dem jeweiligen Konturbereich im zweiten Zustand des Verbindungselements unterstützbar ist. Vorteilhafterweise ist also der Form- und/oder Kraftschluss zwischen dem jeweiligen Konturbereich und dem Verbindungselement gezielt beispielsweise durch quer zur Längsachse des Konturbereichs verlaufende Rücksprünge im Konturbereich verringerbar.

Bevorzugt ist die Kontur entlang der Längsachse durch den Reibring und/oder den Anbindungsadapter derart begrenzt, dass das Verbindungselement innerhalb der Kontur im ersten Zustand zumindest in eine Richtung der Längsachse nicht weiter verlagerbar ist. Mit anderen Worten ist also der Rücksprung, welcher den adapterseitigen oder den reibringseitigen Konturbereich bildet, quer zur Rotationsachse bzw. entlang der Längsachse begrenzt, sodass das Verbindungselement entlang der Längsachse nicht weiter verschiebbar ist. Dazu ist bevorzugt quer zur Längsachse in der Kontur ein weiterer Anschlag oder eine Wand vorsehbar, an welcher das Verbindungselement anlagerbar ist. Zweckmäßigerweise kann sich das Verbindungselement im Umformprozess an diesem Anschlag oder dieser Wand abstützen. Der Bereich, welcher die Begrenzung bzw. die Wand darstellt, braucht dabei nicht durchgängig geschlossen zu sein, sondern kann Löcher, Spalte oder Schlitze in die Umgebung, beispielsweise auch in die Belüftungskanäle des Reibrings aufweisen. Mit anderen Worten liegt in bevorzugten Ausführungsformen bevorzugt nur eine bereichsweise Begrenzung vor.

Weiterhin bevorzugt weist der reibringseitige und/oder der adapterseitige Konturbereich zumindest einen Öffnungsbereich auf, wobei der Öffnungsbereich als Öffnung im Reibring und/oder im Anbindungsadapter ausgeführt ist, welche derart ausgebildet ist, dass das Verbindungselement im ersten Zustand durch diese Öffnung führbar und in der Kontur anordenbar ist. Bei bevorzugten Ausführungsformen ist der adapterseitige Konturbereich derart entlang der Längsachse in Richtung der Rotationsachse erweitert, dass der Öffnungsbereich in Richtung der Rotationsachse bildbar und von dort zugänglich ist. Mit anderen Worten stellt also der Öffnungsbereich derart eine Verlängerung des adapterseitigen Konturbereichs in Richtung der Rotationsachse dar, dass der adapterseitige Konturbereich aus der Richtung der Rotationsachse zugänglich wird. In weiteren bevorzugten Ausführungsformen ist der reibringseitige Konturbereich derart nach außen hin erweitert, dass der reibringseitige Konturbereich radial von außen gesehen erreichbar ist. Alternativ bevorzugt können auch der Reibring und/oder der Anbindungsadapter in Richtung der Rotationsachse und/oder auch schräg dazu derart mit zumindest einem Öffnungsbereich, beispielsweise ausgeführt als Durchbruch, versehen sein, dass eine Anordnung des Verbindungselements durch diesen Öffnungsbereich im ersten Zustand des Verbindungselements möglich ist.

Zweckmäßigerweise weist der reibringseitige und/oder der adapterseitige Konturbereich zumindest einen Zugangsbereich auf, wobei der Zugangsbereich als Öffnung im Reibring und/oder im Anbindungsadapter ausgeführt ist, welche ausgebildet ist, ein Wirkmedium und/oder ein Werkzeug an die Kontur und/oder das Verbindungselement zu führen, sodass das Verbindungselement umformbar ist. Bei bevorzugten Ausführungsformen ist der reibringseitige Konturbereich derart in Richtung der Rotationsachse verlängert, dass ein Zugangsbereich bildbar ist. Weiterhin bevorzugt ist der Zugangsbereich auch im adapterseitigen Konturbereich bzw. im Reibring anordenbar. Der Verlauf des Zugangsbereichs ist weiterhin bevorzugt in allen Raumrichtungen darstellbar. Entscheidend ist, dass ein Wirkmedium und/oder ein Werkzeug an der Kontur und/oder dem Verbindungselement festlegbar oder anordenbar sind.

Bevorzugt ist das Verbindungselement als Hohlkörper mit zumindest einer Öffnung ausgebildet, wobei die Öffnung im ersten Zustand des Verbindungselements über den Zugangsbereich zugänglich ist. Bevorzugt ist die Öffnung derart ausgeführt, dass ein Werkzeug und/oder ein Wirkmedium für den Umformprozess des Verbindungselements anordenbar sind. Zweckmäßigerweise ist das Verbindungselement im ersten Zustand in der Kontur derart angeordnet, dass die Öffnung des Verbindungselements über den Zugangsbereich der Kontur zugänglich ist.

Weiterhin bevorzugt ist das Verbindungselement als sich entlang der Längsachse erstreckender zylindrischer Hohlkörper ausgebildet, welcher auf einer Seite verschlossen ist. Weiterhin bevorzugt ist zumindest eine Außenkante des Verbindungselements angefast bzw. mit geeigneten Radien versehen, um eine optimale Verlagerung in die Kontur hinein zu ermöglichen bzw. um die Kontur beim Umformprozess nicht zu beschädigen. Bevorzugt ist die verschlossene Seite des Verbindungselements als Wand bzw. Boden quer zur Längsachse ausgebildet. Weiterhin bevorzugt ist dieser Wandbereich auch kugelförmig und/oder spitz zulaufend bzw. in den Hohlkörper hineinragend ausgeführt. In alternativ bevorzugten Ausführungsformen weist der Wandbereich in sich auch eine unterschiedliche Wandstärke auf. Von Vorteil ist es dabei, dass die Form des Verbindungselements sich auch in der Geometrie der Kontur wiederfindet. Weiterhin von Vorteil ist es, wenn die offene Seite des Verbindungselements derart an ein Werkzeug oder ein Wirkmedium angepasst ist, dass dieses leicht anordenbar ist. Mit anderen Worten ist beispielsweise die Öffnung des Verbindungselements umlaufend angefast, um ein Werkzeug sauber anlegen zu können.

Weiterhin ist die Wandstärke des Verbindungselements entlang der Längsachse bereichsweise unterschiedlich ausgeführt. Der Übergang in der Wandstärke entlang der Längsachse kann dabei als Absatz ausgeführt sein, besonders bevorzugt ist der Übergang stetig ausgeführt. Das Verbindungselement kann auch radial zumindest bereichsweise eine unterschiedliche Wandstärke aufweisen. Die Wandstärke selbst ist bevorzugt an die Prozessgrößen des Umformprozesses angepasst. Dies bedeutet, dass, wenn beim Umformverfahren beispielsweise mit geringen Drücken gearbeitet wird, die Wand des Verbindungselements dünner ausfallen darf bzw. muss, um eine ausreichend große Aufweitung durch den Umformprozess zu erzielen. Weiter ist die Stärke der Wand bevorzugt derart auszulegen, dass das Verbindungselement mit dem adapterseitigen und/oder reibringseitigen Konturbereich einen Form- und/oder Kraftschluss in der Art und Weise darstellt, dass ein axiale Beweglichkeit der Teile zueinander erhalten bleibt. Bevorzugt ist also durch die entlang der Längsachse zumindest bereichsweise unterschiedliche Wandstärke des Verbindungselements der Form- und/oder Kraftschluss einstellbar. In einer weiteren bevorzugten Ausführungsform kann die Wandstärke des Verbindungselements auch radial zumindest bereichsweise unterschiedlich ausgeführt sein. Es versteht sich, dass die Wandstärke des Verbindungselements also entlang der Längsachse und/oder radial zumindest bereichsweise unterschiedlich ausgebildet sein kann. In einer weiteren bevorzugten Ausführungsform ist das Verbindungselement aus einem Material, bevorzugt einem Sintermetall, herstellbar, welches entlang der Längsachse unterschiedliche Werkstoffeigenschaften, insbesondere in Bezug auf den Umformgrad, aufweist. Grundsätzlich sind also die Werkstoffeigenschaften bzw. im Speziellen der Umformwiderstand entlang der Längsachse des Verbindungselements und/oder radial unterschiedlich ausgeführt, wodurch der Form- und/oder Kraftschluss einstellbar ist. Über die Werkstoffeigenschaften sind also ebenfalls bereichsweise der Umformgrad und damit der Form- und/oder Kraftschluss beeinflussbar.

Von Vorteil ist es, dass das Verbindungselement derart in der Kontur angeordnet ist, dass die Wandstärke des Verbindungselements im reibringseitigen Konturbereich größer ist als im adapterseitigen Konturbereich. Die unterschiedliche Wandstärke bewirkt, dass bei beispielsweise gleichem Innendruck das Verbindungselement im reibringseitigen Konturbereich weniger stark aufgeweitet wird, als im adapterseitigen Konturbereich. Die Art und Weise des Form- und/oder Kraftschlusses des Verbindungselements mit der Kontur ist damit gezielt und bereichsweise einstellbar. Bevorzugt kann es auch sein, für jedes Verbindungselement bzw. dessen Kombination mit der Kontur, ein anderes Vorgehen zu wählen, dies bedeutet beispielsweise, dass in einer Kontur eine axiale Beweglichkeit zwischen dem Verbindungselement und dem Reibring darstellbar ist, bei einem weiteren Verbindungselement der Bremsscheibenanordnung eine axiale Beweglichkeit zwischen dem Verbindungselement und dem Anbindungsadapter.

Zweckmäßigerweise ist das Verbindungselement im zweiten Zustand in dem reibringseitigen und/oder dem adapterseitigen Konturbereich derart aufgenommen, dass das Verbindungselement in Relation zum Reibring oder zum Adapterring entlang der Längsachse beweglich ist. Eine bevorzugte Ausführungsform erlaubt eine axiale Verschiebbarkeit des Verbindungselements im reibringseitigen Konturbereich, wodurch ein Aufschirmen des Reibrings verhinderbar ist. Bevorzugt ist hierzu das Verbindungselement entlang der Längsachse mit unterschiedlicher Wandstärke ausgestattet. Weiterhin bevorzugt ist das Verbindungselement mit gleicher Wandstärke ausgestattet, wobei der Durchmesser und/oder die Innengeometrie des adapterseitigen und/oder reibringseitigen Konturbereichs entlang der Längsachse unterschiedlich ausgeführt sind. Mit anderen Worten ist beispielsweise der Innendurchmesser des reibringseitigen Konturbereichs größer ausführbar als der Innendurchmesser des adapterseitigen Konturbereichs. Bevorzugt ist der Innendurchmesser des adapterseitigen Konturbereichs beispielsweise in etwa so groß ausgeführt, dass das Verbindungselement in seinem ersten Zustand über den Öffnungsbereich gerade noch am adapterseitigen Konturbereich anordenbar ist, während das Verbindungselement im reibringseitigen Konturbereich quer zur Längsachse noch ein geringfügiges Spiel aufweist. Mit anderen Worten wird dadurch im zweiten Zustand des Verbindungselements im reibringseitigen Konturbereich zwischen dem Verbindungselement und dem reibringseitigen Konturbereich ein stärkerer bzw. unterschiedlicher Form- und/oder Kraftschluss erreicht, als im reibringseitigen Konturbereich. Damit ist eine axiale Beweglichkeit des Verbindungselements im zweiten Zustand im reibringseitigen Konturbereich darstellbar. In weiteren bevorzugten Ausführungsformen kann es auch von Vorteil sein, eine Beweglichkeit des Verbindungselements innerhalb der Kontur quer zur Längsachse zuzulassen. Bevorzugt ist also durch den Durchmesser und/oder die Innengeometrie des adapterseitigen und/oder reibringseitigen Konturbereichs (entlang der Längsachse) der Form- und/oder Kraftschluss einstellbar. In einer weiteren bevorzugten Ausführungsform weist das Verbindungselement eine zumindest bereichsweise Beschichtung auf, wodurch dessen Beweglichkeit in seinem zweiten Zustand in der Kontur beeinflussbar wird.

Bevorzugt ist also durch die entlang der Längsachse unterschiedliche Wandstärke und/oder die unterschiedlichen Werkstoffeigenschaften des Verbindungselements (im Speziellen in Bezug auf den Umformwiderstand) und/oder durch den entlang der Längsachse unterschiedlichen Durchmesser und/oder die unterschiedliche Innengeometrie des reibringseitigen und/oder adapterseitigen Konturbereichs der Form- und/oder Kraftschluss der Verbindungselements mit der Kontur entlang der Längsachse und auch radial gesehen einstellbar. Möglich ist, dass der Formund/oder Kraftschluss entlang der Längsachse und/oder auch umfänglich bzw. radial zum Verbindungselement gesehen einstellbar ist. Die "Einstellbarkeit" ist dabei so zu verstehen, dass die Höhe bzw. Stärke des Form- und/oder Kraftschlusses einstellbar ist, d. h es kann z. B. eingestellt werden, inwieweit ein axiales und/oder radiales Spiel vorhanden ist, mit anderen Worten wie "fest" das Verbindungselement in der Kontur angeordnet ist. Durch die Wandstärke und die Werkstoffeigenschaften wird insbesondere der Verformungswiderstand bzw. der Umformwiderstand gegenüber dem Innendruck beeinflusst, wodurch der Form- und/oder Kraftschluss einstellbar ist.

Zweckmäßigerweise sind der Reibring und der Anbindungsadapter im Wesentlichen konzentrisch zueinander um die Rotationsachse angeordnet, wobei zumindest ein reibringseitiger Konturbereich und zumindest ein adapterseitiger Konturbereich derart fluchtend zueinander angeordnet sind, dass eine gemeinsame Kontur gebildet ist, innerhalb derer das Verbindungselement anordenbar ist.

In einer weiteren bevorzugten Ausführungsform ist die Kontur entlang der Längsachse weder durch den Reibring noch durch den Anbindungsadapter begrenzt. Mit anderen Worten ist die Kontur also quer zur Rotationsachse von beiden Seiten zugänglich.

Alternativ bevorzugt weist die Kontur zumindest einen Öffnungsbereich auf, welcher in der Ebene, die sich im Wesentlichen quer zur Rotationsachse erstreckt, oder auch schräg oder quer zu dieser angeordnet ist.

Bevorzugt ist zumindest ein Zugangsbereich als einer der Öffnungsbereiche ausbildbar. Mit anderen Worten ist also die Öffnung derart darstellbar, dass sie sowohl die Funktion des Zugangsbereichs, als auch die Funktion des Öffnungsbereichs beinhalten kann.

Bevorzugterweise weist die unterschiedliche Wanddicke des Verbindungselements einem erhöhten Innendruck im Verbindungselement derart entgegen, dass die Zunahme des Durchmessers des Verbindungselements, quer zur Längsachse, beim Übergang in den zweiten Zustand des Verbindungselements entlang der Längsachse unterschiedlich ist. Dabei kann die Zunahme des Außendurchmessers des Verbindungselements auch infinitesimal klein und mit dem bloßen Auge nicht ersichtlich sein.

Weiterhin erfindungsgemäß ist ein Verfahren zur Herstellung einer Bremsscheibenanordnung für Scheibenbremsen, insbesondere für Landfahrzeuge vorgesehen, umfassend einen Reibring, einen Anbindungsadapter und zumindest ein Verbindungselement, umfassend die Schritte:
- Bereitstellen des Reibrings und des Anbindungsadapters, wobei der Reibring und der Anbindungsadapter jeweils zumindest einen reibringseitigen und zumindest einen adapterseitigen Konturbereich aufweisen, welche geeignet sind, eine gemeinsame Kontur zu formen;
- Bereitstellen des Verbindungselements, wobei sich das Verbindungselement im ersten Zustand befindet;
- Umformen zumindest eines in bzw. an der Kontur angeordneten Verbindungselements in den zweiten Zustand, unter Ausnutzung eines Zugangsbereichs derart, dass das Verbindungselement mit dem reibringseitigen und/oder adapterseitigen Konturbereich form- und/oder kraftschlüssig verbunden wird, wobei der Außendurchmesser des Verbindungselements im zweiten Zustand zumindest bereichsweise quer zur Längsachse gegenüber dem ersten Zustand vergrößert ist.

Bevorzugt ist durch eine entlang der Längsachse unterschiedliche Wandstärke und/oder durch unterschiedliche Werkstoffeigenschaften des Verbindungselements und/oder durch einen entlang der Längsachse unterschiedlichen Durchmesser und/oder eine unterschiedliche Innengeometrie des reibringseitigen und/oder adapterseitigen Konturbereichs der Form- und/oder Kraftschluss einstellbar. Bevorzugt geeignet ist ein Innenhochdruckumformverfahren oder hydromechanisches Tiefziehen für den Umformprozess des Verbindungselements. Der Außendurchmesser des Verbindungselements ist hierbei derart erweiterbar, dass zwischen der Kontur und dem Verbindungselement ein Form- und/oder Kraftschluss herstellbar ist. Dabei ist es unerheblich, ob der Reibring und/oder der Anbindungsadapter vor oder nach dem Umformprozess zumindest eines Verbindungselements fertig bearbeitet werden.

Weiterhin bevorzugt ist ein Verfahren, welches zusätzlich folgende Schritte umfasst:
- Anordnen des Reibrings und des Anbindungsadapters in einer Vorrichtung derart zueinander, dass zumindest eine gemeinsame Kontur gebildet wird, die sich entlang der Längsachse erstreckt;
- Anordnen und Verlagern des Verbindungselements in die Kontur über den Öffnungsbereich, wobei das Verbindungselement zweckmäßigerweise derart an der Kontur angeordnet wird, dass die Wandstärke des Verbindungselements im reibringseitigen Konturbereich größer ist als im adapterseitigen Konturbereich.

Bei dem bevorzugten Verfahren erfolgt die Anordnung des Reibrings und des Anbindungsadapters dabei vor der Anordnung des Verbindungselements.

Weiterhin bevorzugt ist ein Verfahren, welches zusätzlich folgende Schritte umfasst:
- Anordnen zumindest eines Verbindungselements im reibringseitigen oder im adapterseitigen Konturbereich;
- Anordnen des Reibrings und des Anbindungsadapters in einer Vorrichtung derart zueinander, dass zumindest eine gemeinsame Kontur gebildet wird, die sich entlang der Längsachse erstreckt;
- Verlagern des Verbindungselements in die Kontur, wobei das Verbindungselement zweckmäßigerweise derart an der Kontur angeordnet wird, dass die Wandstärke des Verbindungselements im reibringseitigen Konturbereich größer ist als im adapterseitigen Konturbereich.

Bevorzugt wird dabei das Verbindungselement im reibringseitigen oder im adapterseitigen Konturbereich derart angeordnet, dass es von dem jeweiligen Konturbereich komplett umschlossen wird. Damit ist es möglich, den Reibring oder den Anbindungsadapter erst nach Anordnung der Verbindungselemente zueinander auszurichten. Wurden die Verbindungselemente in den adapterseitigen Konturbereichen angeordnet, können sie beispielsweise bevorzugt über eine gemeinsame Drehung des Anbindungsadapters und des Reibrings unter Ausnutzung der Zentrifugalkraft in den reibringseitigen Konturbereiche hinein verlagert werden.

Weiterhin bevorzugt ist ein Verfahren, zusätzlich umfassend die Schritte:
- Anordnen des Verbindungselements im reibringseitigen oder im adapterseitigen Konturbereich;
- Anordnen des Reibrings und des Anbindungsadapters in der Vorrichtung derart zueinander, dass durch Verdrehen des Reibrings und/oder des Anbindungsadapters die Kontur gebildet wird, wobei das Verbindungselement zweckmäßigerweise derart in der Kontur angeordnet wird, dass die Wandstärke des Verbindungselements im reibringseitigen Konturbereich größer ist als im adapterseitigen Konturbereich und wobei die Anordnung des Verbindungselements derart erfolgt, dass eine Verdrehung des Reibrings und des Anbindungsadapters zueinander nicht mehr möglich ist.

Mit anderen Worten wird also erst durch Verdrehen des Reibrings und des Anbindungsadapters und die anschließende Verlagerung des Verbindungselements die Kontur gebildet, die geeignet ist, den Form- und/oder Kraftschluss mit dem Verbindungselement aufzubauen.

Die Verlagerung des Verbindungselements kann bei den genannten Verfahren dabei grundsätzlich bevorzugt händisch und/oder mit einer geeigneten Vorrichtung erfolgen.

Es versteht sich, dass sämtliche weiteren Merkmale und Vorteile der erfindungsgemäßen Bremsscheibenandordnung ebenfalls in dem erfindungsgemäßen Verfahren zur Herstellung einer Bremsscheibenanordung Anwendung finden können.

Weitere Vorteile und Merkmale ergeben sich aus der nachfolgenden Beschreibung bevorzugter Ausführungsformen der erfindungsgemäßen Bremsscheibenanordnung mit Bezug auf die beigefügten Figuren. Einzelne Merkmale der einzelnen Ausführungsformen können dabei im Rahmen der Erfindung miteinander kombiniert werden.

Es zeigen:
- Figur 1a:: eine Schnittdarstellung einer bevorzugte Ausführungsform der Bremsscheibenanordnung im ersten Zustand;
- Figur 1b:: eine Schnittdarstellung der bevorzugte Ausführungsform der Bremsscheibenanordnung im zweiten Zustand;
- Figur 2:: eine Schnittdarstellung einer weiteren bevorzugten Ausführungsform der Bremsscheibenanordnung;
- Figur 3:: eine Ansicht und einen Teilschnitt einer weiteren bevorzugten Ausführungsform der Bremsscheibenanordnung;
- Figur 4a:: eine Schnittdarstellung einer weiteren bevorzugten Ausführungsform der Bremsscheibenanordnung im ersten Zustand;
- Figur 4b:: eine Schnittdarstellung der weiteren bevorzugten Ausführungsform der Bremsscheibenanordnung im zweiten Zustand;
- Figur 5a:: eine Schnittdarstellung einer weiteren bevorzugten Ausführungsform der Bremsscheibenanordnung im ersten Zustand;
- Figur 5b:: eine Schnittdarstellung der weiteren bevorzugten Ausführungsform der Bremsscheibenanordnung im zweiten Zustand;
- Figur 6:: eine Schnittdarstellung einer weiteren bevorzugten Ausführungsform der Bremsscheibenanordnung;
- Figur 7:: eine Schnittdarstellung einer weiteren bevorzugten Ausführungsform der Bremsscheibenanordnung;
- Figur 8:: eine Schnittdarstellung einer weiteren bevorzugten Ausführungsform der Bremsscheibenanordnung in einer Ansicht quer zur Rotationsachse.

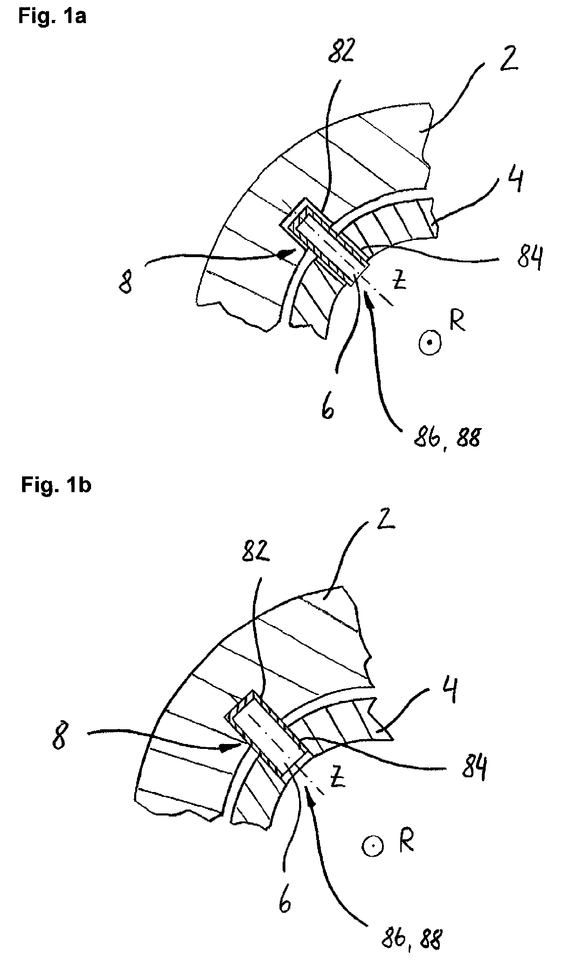

**Fig. 1a** zeigt eine bevorzugte Ausführungsform der erfindungsgemäßen Bremsscheibenanordnung. Der Reibring 2 und der Anbindungsadapter 4 sind konzentrisch um die Rotationsachse R und im Wesentlichen quer zu dieser ausgebildet bzw. orientiert. Der reibringseitige Konturbereich 82 ist als Rücksprung im Reibring 2 ausgebildet. In der bevorzugten Ausführungsform ist der adapterseitige Konturbereich 84 als durchgehende Öffnung im Anbindungsadapter 4 ausgebildet. Der adapterseitige Konturbereich 84 bildet mit dem reibringseitigen Konturbereich 82 entlang der Längsachse Z die Kontur 8. Fig. 1a zeigt, wie das Verbindungselement 6 in seinem ersten Zustand in einer bevorzugten Ausführungsform in der Kontur 8 positionierbar ist. Um das Verbindungselement 6 in diese Position zu bringen, wird der Öffnungsbereich 86 verwendet. Fig. 1b zeigt entsprechend, dass der Öffnungsbereich 86 zugleich die Funktion des Zugangsbereichs 88 aufweist. Das Verbindungselement 6 ist in Fig. 1b in seinem zweiten Zustand skizziert. Deutlich zu sehen gegenüber Fig. 1a ist, dass das Verbindungselement in Fig. 1b in der Kontur 8 derart angelagert ist, dass, anders als in Fig. 1a, kein Spiel zwischen dem Verbindungselement 6 und der Kontur 8 mehr ersichtlich ist. Mit anderen Worten ist in Fig. 1b der zweite Zustand des Verbindungselements 6 gezeigt, in welchem es durch ein Umformverfahren derart aufgeweitet wurde, dass das Verbindungselement 6 mit der Kontur 8 eine kraft- und/oder formschlüssige Verbindung eingeht.

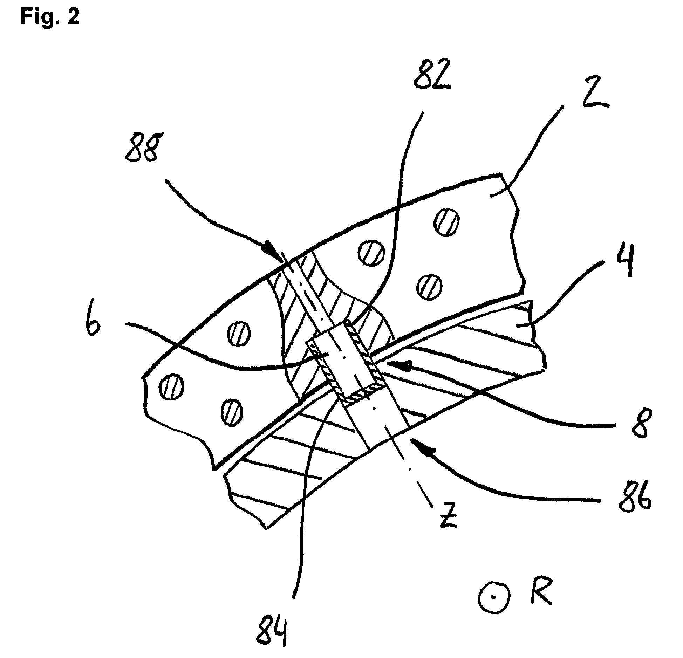

**Fig. 2** zeigt eine weitere bevorzugte Ausführungsform der Bremsscheibenanordnung. Der Reibring 2 und der Anbindungsadapter 4 sind im Wesentlichen konzentrisch und im Wesentlichen quer zu der Rotationsachse R angeordnet. Bevorzugte Ausführungsform der Bremsscheibenanordnung weist in Fig. 2 einen belüfteten Reibring 2 auf. Bevorzugte Ausführungsform ist also eine innen belüftete Scheibenbremse. Das Verbindungselement 6 ist im zweiten Zustand dargestellt. Es ist in der Kontur 8 angeordnet, welche aus dem reibringseitigen Konturbereich 82 und dem adapterseitigen Konturbereich 84 gebildet wird. In bevorzugter Ausführungsform ist der Öffnungsbereich 86 nicht gleichzeitig als Zugangsbereich 88 ausgeführt. Der Öffnungsbereich 86 erstreckt sich axial zur Rotationsachse R in den Anbindungsadapter 4 und ist derart ausgebildet, dass das Verbindungselement 6 in seinem ersten Zustand in die Kontur 8 führbar ist. Der Zugangsbereich 88 hingegen ist als axial zur Rotationsachse R verlaufender Durchbruch im Reibring 2 ausgebildet. Entscheidend für den Umformprozess des Verbindungselements 6 ist, dass über den Zugangsbereich 88 die Öffnung des Verbindungselements 6 erreichbar ist.

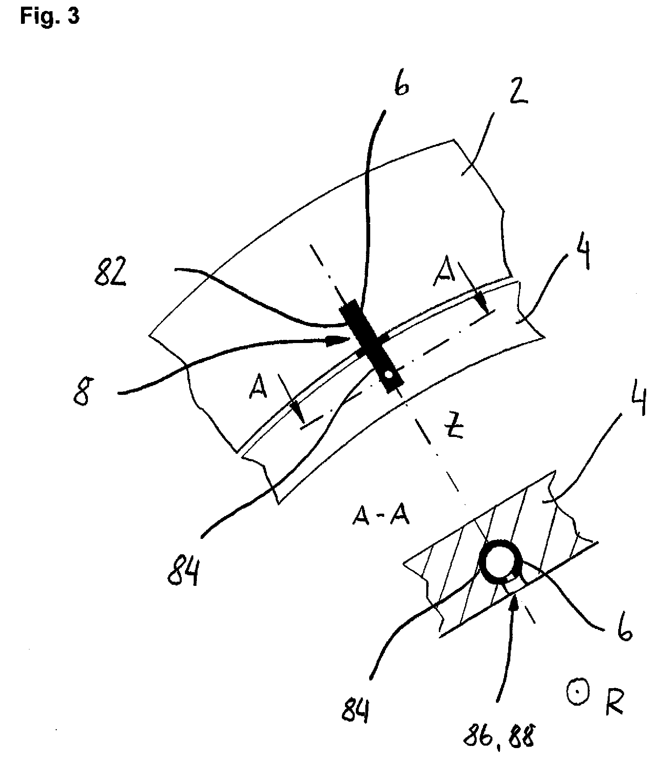

**Fig. 3** zeigt eine weitere bevorzugte Ausführungsform der Bremsscheibenanordnung. Dargestellt sind ein Ausschnitt der Bremsscheibenordnung in Richtung der Rotationsachse R und ein Teilschnitt im Bereich des Anbindungsadapters 4 entlang der Achse A-A. Die Kontur 8 bzw. der reibringseitige Konturbereich 82 und der adapterseitige Konturbereich 84 sind in Richtung der Rotationsachse R zugänglich. Der reibringseitige Konturbereich 82 ist axial zur Rotationsachse R in Richtung des äußeren Durchmessers des Reibrings 2 abgeschlossen. Ebenso ist der adapterseitige Konturbereich 84 axial zur Rotationsrichtung R zum inneren Durchmesser des Anbindungsadapters 4 begrenzt. Das Verbindungselement 6 ist über den im Schnitt A-A gezeigten Öffnungsbereich 86 in seinem ersten Zustand in der Kontur 8 anordenbar. Bevorzugt erfolgt die Anordnung des Verbindungselements 6 dabei derart, dass die Öffnung des Verbindungselements 6 über den Zugangsbereich 88 erreichbar ist. In bevorzugter Ausführungsform sind der Zugangsbereich 88 und der Öffnungsbereich 86 gleich ausgeführt. In der Schnittdarstellung A-A ist das Verbindungselement 6 in seinem zweiten Zustand dargestellt. Eine form- und/oder kraftschlüssige Verbindung mit der Kontur 8 ist hierbei erreicht. Der Schnitt A-A zeigt, dass das Verbindungselement 6 und der reibringseitige Konturbereich 82 und der adapterseitige Konturbereich 84, also die Kontur 8, derart zueinander ausgelegt werden müssen, dass das Verbindungselement 6 in seinem ersten Zustand durch den Öffnungsbereich 86 in die Kontur 8 anordenbar ist.

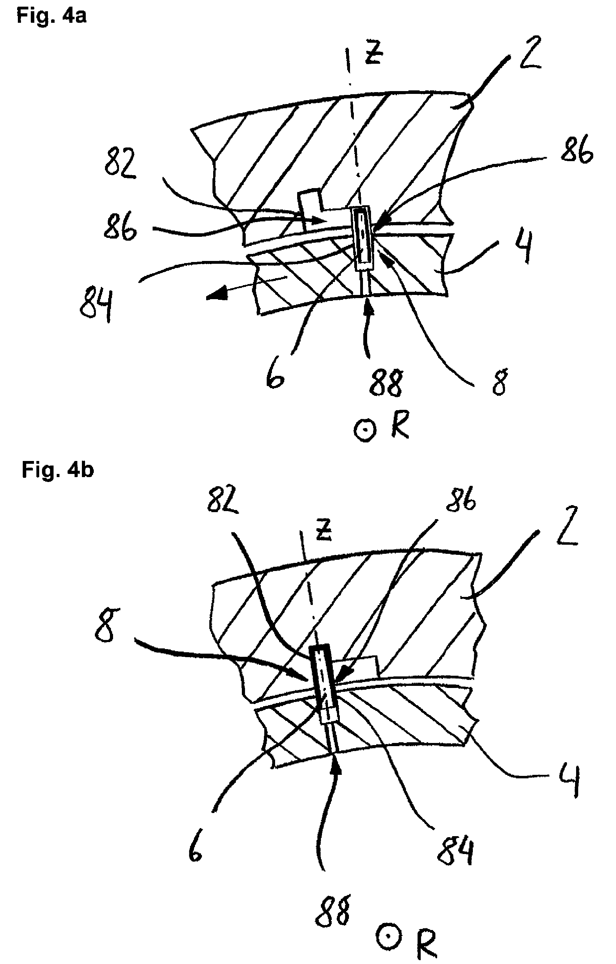

**Fig. 4a** zeigt eine weitere bevorzugte Ausführungsform der Bremsscheibenanordnung. In der bevorzugten Ausführungsform ist das Verbindungselement 6 ausgehend vom äußeren Durchmesser des Anbindungsadapters 4 radial im adapterseitigen Konturbereich 84 anordenbar. Mit anderen Worten ist also zumindest ein Verbindungselement 6 in zumindest einen adapterseitigen Konturbereich 84 steckbar. Der Reibring 2 ist unabhängig von diesem Vorgang anordenbar. Mit anderen Worten wird also der Reibring 2 erst zum Anbindungsadapter 4 hin positioniert, wenn das Verbindungselement 6 im adapterseitigen Konturbereich 84 angeordnet ist. In der bevorzugten Ausführungsform ist der Öffnungsbereich 86 des reibringseitigen Konturbereichs 82 derart ausgeführt, dass das Verbindungselement 6 axial in Richtung der Rotationsachse R im Öffnungsbereich 86 anordenbar und über diesen Öffnungsbereich 86 zum reibringseitigen Konturbereich 82 führbar ist. In bevorzugter Ausführungsform ist dies über eine Drehbewegung des Reibrings 2 und/oder des Anbindungsadapters 4 darstellbar. Erst durch eine Verlagerung des Verbindungselements 6 in den reibringseitigen Konturbereich 82 hinein, wird letztendlich die Kontur 8 gebildet, welche der form- und/oder kraftschlüssigen Verbindung mit dem Verbindungselement 6 dient. Ist das Verbindungselement 6 in der Kontur 8 angeordnet, ist ein Verdrehen des Reibrings 2 und des Anbindungsadapters 4 relativ zueinander nicht oder nur noch geringfügig möglich. Fig. 4b zeigt die Anordnung des Verbindungselements 6 im zweiten Zustand der Kontur 8. Die Öffnung des Verbindungselements 6 ist über den Konturbereich 88 zugänglich. In weiteren bevorzugten Ausführungsformen weist zumindest ein reibringseitiger Konturbereich 82 die Geometrie des in Fig. 4 dargestellten adapterseitigen Konturbereichs 84 auf und umgekehrt.

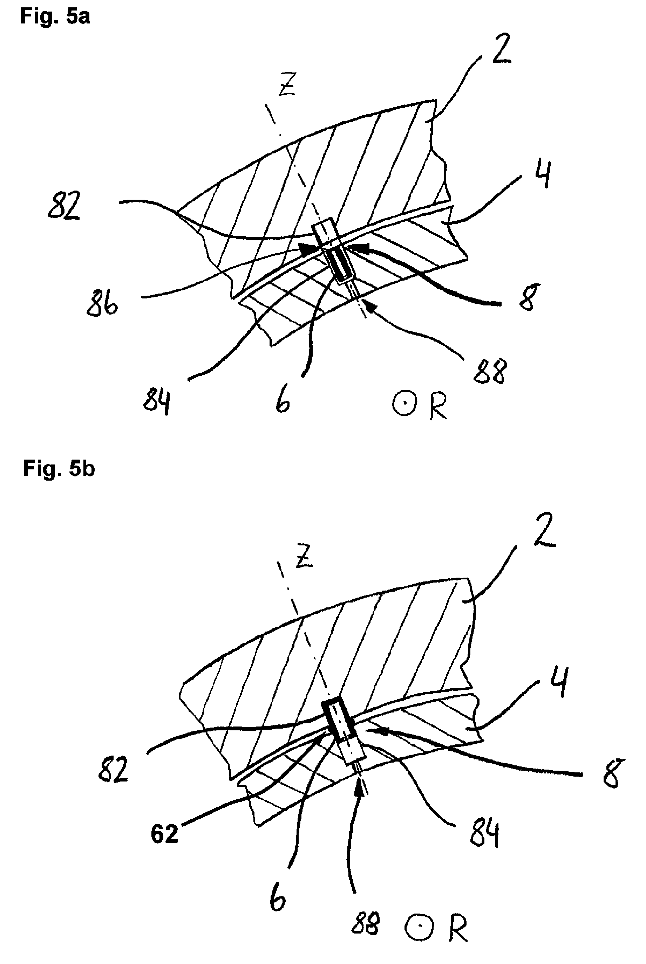

**Fig. 5** zeigt eine weitere bevorzugte Ausführungsform der Bremsscheibenanordnung. In gezeigter Ausführungsform ist der adapterseitige Konturbereich 84 derart ausgebildet, dass er das Verbindungselement 6 in dessen ersten Zustand komplett umschließen kann. Bevor das Verbindungselement 6 umgeformt wird, wird es zunächst in den Reibring, also in den reibringseitigen Konturbereich 82, verlagert. Dieser Zustand ist in Fig. 5b gezeigt. Angedeutet ist weiterhin ein kleiner Wulst 62, den das Verbindungselement 6 in seinem zweiten Zustand zwischen dem Reibring 2 und dem Anbindungsadapter 4 ausbildet. Bevorzugt wird dadurch neben der form- und/oder kraftschlüssigen Verbindung des Verbindungselements 6 mit dem Konturbereich 8 ein Verlagern des Verbindungselement 6 entlang der Längsachse Z zusätzlich zur form- und/oder kraftschlüssigen Verbindung verhindert. In weiteren bevorzugten Ausführungsformen weist zumindest ein reibringseitiger Konturbereich 82 die Geometrie des in Fig. 5 dargestellten adapterseitigen Konturbereichs 84 auf und umgekehrt.

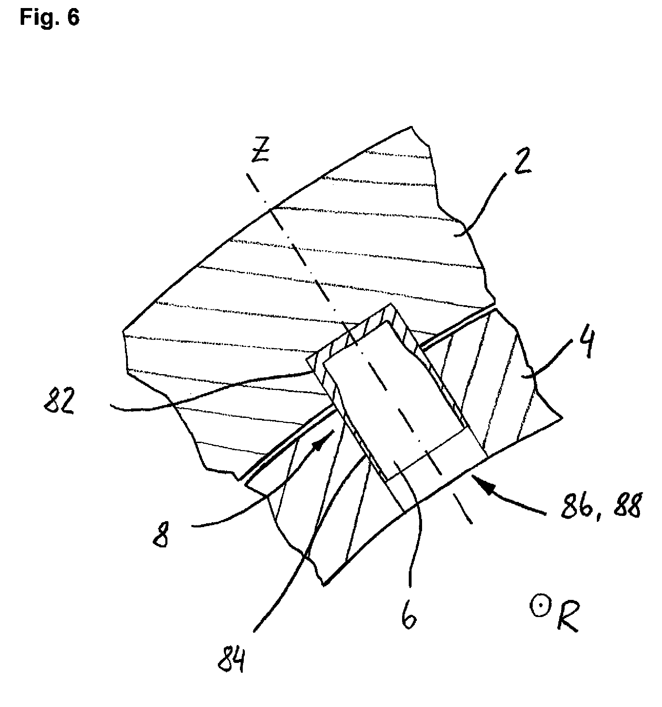

**Fig. 6** zeigt eine weitere bevorzugte Ausführungsform der Bremsscheibenanordnung. Bevorzugt ausgeführtes Verbindungselement 6 ist derart gestaltet, dass sein Innendurchmesser im reibringseitigen Konturbereich 82 kleiner ist als im adapterseitigen Konturbereich 84. Mit anderen Worten ist die Wandstärke des Verbindungselements 6 im reibringseitigen Konturbereich 82 größer als im adapterseitigen Konturbereich 84. Von großem Vorteil ist es dabei, dass das Verbindungselement 6 im reibringseitigen Konturbereich 82 einen anders gearteten Formund/oder Kraftschluss ausbildet als im adapterseitigen Konturbereich 84. Damit ist es möglich, eine radiale Beweglichkeit des Reibrings 2 quer zur Rotationsachse R in Bezug auf das Verbindungselement 6 zu ermöglichen, wodurch ein Aufschirmen des Reibrings verhinderbar ist.

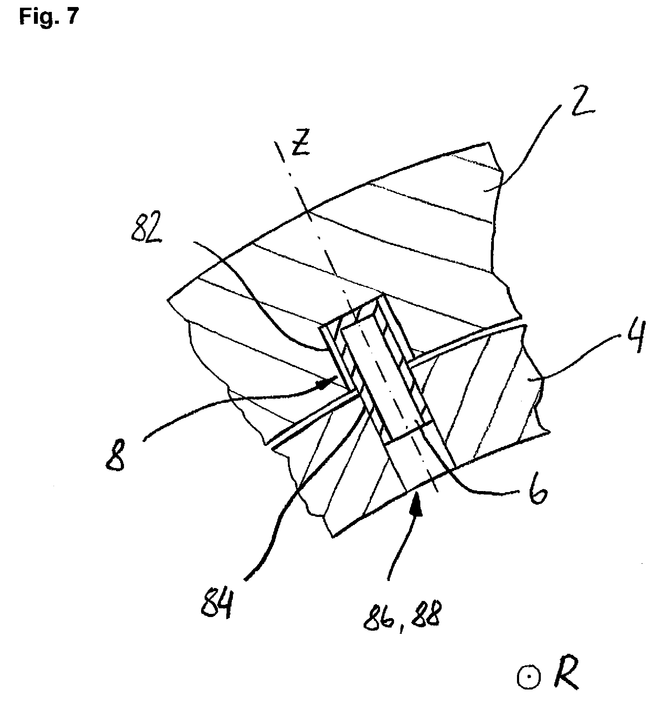

**Fig. 7** zeigt eine weitere bevorzugte Ausführungsform der Bremsscheibenanordnung. Dargestellt ist das Verbindungselement 6 in seinem ersten Zustand. Deutlich wird hierbei, dass der Öffnungsbereich 86 und der adapterseitige Konturbereich 84 gerade so dimensioniert sind, dass das Verbindungselement 6 durchführbar bzw. aufnehmbar ist. Der reibringseitige Konturbereich 82 weist hingegen umfänglich zum Verbindungselement 6 ein Spiel auf. Damit wird erreicht, dass, wenn das Verbindungselement 6 in den zweiten Zustand übergeführt wird, wenn sich also der Außendurchmesser des Verbindungselements 6 quer zur Längsachse Z vergrößert, im reibringseitigen Konturbereich ein weniger ausgeprägter Form- und/oder Kraftschluss ausgebildet wird als im adapterseitigen Konturbereich 84. Somit ist auch mit einem Verbindungselement 6, welches entlang der Längsachse Z eine konstante Wandstärke aufweist, ein unterschiedlicher Form- und/oder Kraftschluss entlang der Kontur 8 möglich. Weitere bevorzugte Ausführungsformen weisen auch Kombinationen auf, das heißt Verbindungselemente 6 mit bereichsweise unterschiedlichen Wandstärken kombiniert mit Konturen 8, wie sie in Fig. 7 ausgebildet sind.

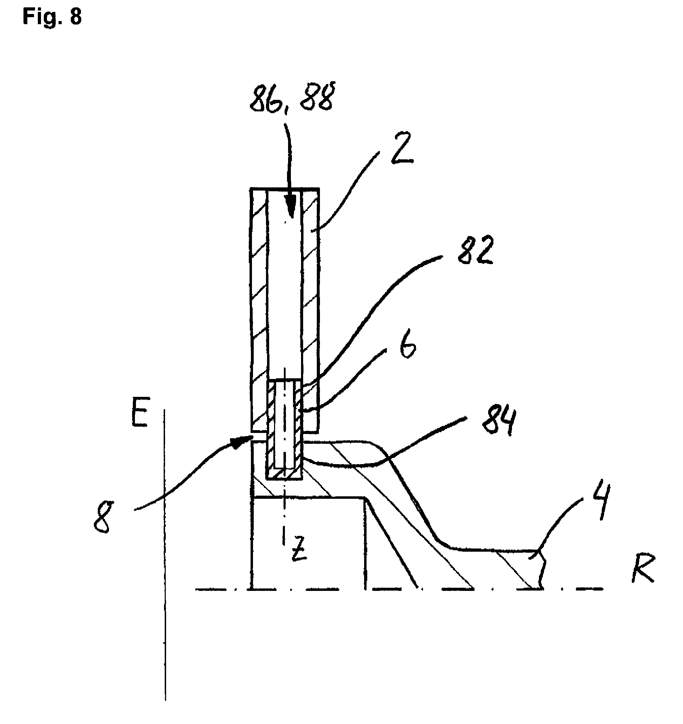

**Fig. 8** zeigt eine weitere bevorzugte Ausführungsform der Bremsscheibenanordnung. Der Anbindungsadapter 4 ist in der bevorzugten Ausführungsform topfförmig entlang der Rotationsachse R ausgebildet. Quer bzw. im Wesentlichen quer zur Rotationsachse R verläuft die Ebene E. Parallel zur Ebene E ist der Reibring 2 über das Verbindungselement 6 im Anbindungsadapter 4 angeordnet. Die Anordnung des Verbindungselements 6 im Anbindungsadapter 4 bzw. im Reibring 2 erfolgt über den Öffnungsbereich 86, welcher als radial zur Rotationsachse R verlaufende Öffnung im Reibring 2 ausgebildet ist. Genannter Öffnungsbereich 86 übernimmt ebenfalls die Funktion des Zugangsbereichs 88, über welchen ein Werkzeug bzw. ein Wirkmedium für die Umformung des Verbindungselements 6 an die Öffnung des Verbindungselements 6 anordenbar ist.

### Bezugszeichenliste

- 2: Reibring
- 4: Anbindungsadapter
- 6: Verbindungselement
- 62: Wulst
- 8: Kontur
- 82: reibringseitiger Konturbereich
- 84: adapterseitiger Konturbereich
- 86: Öffnungsbereich
- 88: Zugangsbereich
- Z: Längsachse
- R: Rotationsachse
- E: Ebene

## Patentansprüche

1. Bremsscheibenanordnung für Scheibenbremsen, insbesondere für Landfahrzeuge, umfassend
einen Reibring (2),
einen Anbindungsadapter (4) zur Anbindung der Bremsscheibenanordnung an eine Radnabe,
zumindest ein Verbindungselement (6) zur Verbindung von Reibring (2) und Anbindungsadapter (4), und
zumindest eine Kontur (8), welche einen reibringseitigen (82) und einen adapterseitigen Konturbereich (84) aufweist, indem die Kontur (8) entlang einer Längsachse (Z) durch quer zu einer Rotationsachse (R) der Bremsscheibenanordnung verlaufende Rücksprünge im Reibring (2) und im Anbindungsadapter (4) geformt ist,
wobei das Verbindungselement (6) über das Aufbringen eines Innendrucks in dem Verbindungselement (6) von einem ersten in einen zweiten Zustand bringbar ist,
wobei das Verbindungselement (6) im ersten Zustand derart ausgebildet ist, dass es innerhalb der Kontur (8) anordenbar ist,
wobei ein Außendurchmesser des Verbindungselements (6) im zweiten Zustand zumindest bereichsweise derart quer zur Längsachse (Z) gegenüber dem ersten Zustand vergrößert ist, dass das Verbindungselement (6) mit dem reibringseitigen (82) und/oder mit dem adapterseitigen Konturbereich (84) form- und/oder kraftschlüssig verbunden ist, und
wobei durch eine entlang der Längsachse (L) unterschiedliche Wandstärke und/oder unterschiedliche Werkstoffeigenschaften des Verbindungselements (6) und/oder durch einen entlang der Längsachse (L) unterschiedlichen Durchmesser und/oder eine unterschiedliche Innengeometrie des reibringseitigen (82) und/oder adapterseitigen Konturbereichs (84) der Form- und/oder Kraftschluss des Verbindungselements (6) mit der Kontur (8) eingestellt ist.

2. Bremsscheibenanordnung nach Anspruch 1,
wobei der Querschnitt der Kontur (8) rund und/oder entlang der Längsachse (Z) konstant ausgebildet ist.

3. Bremsscheibenanordnung nach Anspruch 1 oder 2,
wobei die Kontur (8) entlang der Längsachse (Z) durch den Reibring (2) und/oder den Anbindungsadapter (4) derart begrenzt ist, dass das Verbindungselement (6) innerhalb der Kontur (8) im ersten Zustand zumindest in eine Richtung der Längsachse (Z) nicht weiter verlagerbar ist.

4. Bremsscheibenanordnung nach einem der vorhergehenden Ansprüche, wobei der reibringseitige (82) und/oder der adapterseitige Konturbereich (84) zumindest einen Öffnungsbereich (86) aufweist, wobei der Öffnungsbereich (86) als Öffnung im Reibring (2) und/oder im Anbindungsadapter (4) ausgeführt ist, welche derart ausgebildet ist, dass das Verbindungselement (6) im ersten Zustand durch diese Öffnung führbar und in der Kontur (8) anordenbar ist.

5. Bremsscheibenanordnung nach einem der vorhergehenden Ansprüche, wobei der reibringseitige (82) und/oder der adapterseitige Konturbereich (84) zumindest einen Zugangsbereich (88) aufweist, wobei der Zugangsbereich (88) als Öffnung im Reibring (2) und/oder im Anbindungsadapter (4) ausgeführt ist, welche ausgebildet ist, ein Wirkmedium und/oder ein Werkzeug an die Kontur (8) und/oder das Verbindungselement (6) zu führen, so dass das Verbindungselement (8) umformbar ist.

6. Bremsscheibenanordnung nach einem der vorhergehenden Ansprüche, wobei das Verbindungselement (6) als Hohlkörper mit zumindest einer Öffnung ausgebildet ist, wobei die Öffnung im ersten Zustand des Verbindungselements (6) über den Zugangsbereich (88) zugänglich ist.

7. Bremsscheibenanordnung nach einem der vorhergehenden Ansprüche, wobei das Verbindungselement (6) als sich entlang der Längsachse (Z) erstreckender zylindrischer Hohlkörper ausgebildet ist, welcher auf einer Seite verschlossen ist.

8. Bremsscheibenanordnung nach einem der vorhergehenden Ansprüche, wobei die Wandstärke des Verbindungselements (6) entlang der Längsachse (Z) bereichsweise unterschiedlich ausgeführt ist.

9. Bremsscheibenanordnung nach Anspruch 8,
wobei das Verbindungselement (6) derart in der Kontur (8) angeordnet ist, dass die Wandstärke des Verbindungselements (6) im reibringseitigen Konturbereich (82) größer ist als im adapterseitigen Konturbereich (84).

10. Bremsscheibenanordnung nach einem der vorhergehenden Ansprüche, wobei das Verbindungselement (6) im zweiten Zustand in dem reibringseitigen (82) oder in dem adapterseitigen Konturbereich (84) derart aufgenommen ist, dass das Verbindungselement (6) in Relation zum Reibring (2) oder zum Anbindungsadapter (4) entlang der Längsachse (Z) beweglich ist.

11. Verfahren zur Herstellung einer Bremsscheibenanordnung für Scheibenbremsen, insbesondere für Landfahrzeuge, umfassend einen Reibring (2), einen Anbindungsadapter (4) und zumindest ein Verbindungselement (6), umfassend die Schritte:
- Bereitstellen des Reibrings (2) und des Anbindungsadapters (4), wobei der Reibring (2) und der Anbindungsadapter (4) jeweils zumindest einen reibringseitigen (82) und zumindest einen adapterseitigen Konturbereich (84) aufweisen, welche geeignet sind, eine gemeinsame Kontur (8) zu formen,
- Bereitstellen des Verbindungselements (6), wobei sich das Verbindungselement (6) in einem ersten Zustand befindet,
- Umformen zumindest eines in der Kontur (8) angeordneten Verbindungselements (6) in einen zweiten Zustand über einen Innendruck unter Ausnutzung eines Zugangsbereichs (88) derart, dass das Verbindungselement (6) mit dem reibringseitigen (82) und/oder dem adapterseitigen Konturbereich (84) form- und/oder kraftschlüssig verbunden wird, wobei ein Außendurchmesser des Verbindungselements (6) im zweiten Zustand zumindest bereichsweise quer zur Längsachse (Z) gegenüber dem ersten Zustand vergrößert ist, und
wobei durch eine entlang der Längsachse (L) unterschiedliche Wandstärke und/oder unterschiedliche Werkstoffeigenschaften des Verbindungselements (6) und/oder durch einen entlang der Längsachse (L) unterschiedlichen Durchmesser und/oder eine unterschiedliche Innengeometrie des reibringseitigen (82) und/oder adapterseitigen Konturbereichs (84) der Form- und/oder Kraftschluss des Verbindungselements (6) mit der Kontur (8) eingestellt wird.

12. Verfahren nach Anspruch 11, zusätzlich umfassend die Schritte:
- Anordnen des Reibrings (2) und des Anbindungsadapters (4) in einer Vorrichtung derart zueinander, dass zumindest eine gemeinsame Kontur (8) gebildet wird, die sich entlang der Längsachse (Z) erstreckt,
- Anordnen und Verlagern des Verbindungselements (6) in die Kontur (8) über den Öffnungsbereich (86), wobei das Verbindungselement (6) zweckmäßigerweise derart in der Kontur (8) angeordnet wird, dass die Wandstärke des Verbindungselements (6) im reibringseitigen Konturbereich (84) größer ist als im adapterseitigen Konturbereich (82).

13. Verfahren nach Anspruch 11, zusätzlich umfassend die Schritte:
- Anordnen zumindest eines Verbindungselements (6) im reibringseitigen (82) oder im adapterseitigen Konturbereich (84),
- Anordnen des Reibrings (2) und des Anbindungsadapters (4) in der Vorrichtung derart zueinander, dass zumindest eine gemeinsame Kontur (8) gebildet wird, die sich entlang der Längsachse (Z) erstreckt,
- Verlagern des Verbindungselements (6) in die Kontur (8), wobei das Verbindungselement (6) zweckmäßigerweise derart in der Kontur (8) angeordnet wird, dass die Wandstärke des Verbindungselements (6) im reibringseitigen Konturbereich (84) größer ist als im adapterseitigen Konturbereich (82).

14. Verfahren nach Anspruch 11, zusätzlich umfassend die Schritte:
- Anordnen des Verbindungselements (6) im reibringseitigen (82) oder im adapterseitigen Konturbereich (84),
- Anordnen des Reibrings (2) und des Anbindungsadapters (4) in der Vorrichtung derart zueinander, dass durch Verdrehen des Reibrings (2) und/oder des Anbindungsadapters (4) die Kontur (8) gebildet wird, wobei das Verbindungselement (6) zweckmäßigerweise derart in der Kontur (8) angeordnet wird, dass die Wandstärke des Verbindungselements (6) im reibringseitigen Konturbereich (84) größer ist als im adapterseitigen Konturbereich (82) und wobei die Anordnung des Verbindungselements (6) derart erfolgt, dass eine Verdrehung des Reibrings (2) und des Anbindungsadapters (4) zueinander nicht mehr möglich ist.

## Claims

1. A brake disc arrangement for disc brakes, particularly for land vehicles, comprising
a friction ring (2),
a mounting adapter (4) for mounting the brake disc arrangement on a wheel hub, at least one connecting element (6) for connecting the friction ring (2) and the mounting adapter (4), and
at least one contour (8) having a friction ring-side (82) and an adapter-side contour region (84), in which the contour (8) is shaped along a longitudinal axis (Z) by means of recesses in the friction ring (2) and the mounting adapter (4) running perpendicular or transverse to a rotational axis (R) of the brake disc arrangement, wherein the connecting element (6) can be brought from a first state into a second state by applying an inner pressure in the connecting element (6),
wherein the connecting element (6) in the first state is designed or formed such that it can be arranged inside the contour (8), and
wherein an outer diameter of the connecting element (6) in the second state is enlarged relative to the first state perpendicular or transverse to the longitudinal axis (Z), at least in sections, in such a manner that the connecting element (6) is connected to the friction ring-side (82) and/or the adapter-side contour region (84) by form fit and/or friction fit, and
wherein due to a wall thickness, which is not constant along the longitudinal axis (L), and/or different material properties of the connecting element (6) and/or due to a diameter, which is not constant along the longitudinal axis (L), and/or different inner geometries of the friction ring-side (82) and/or adapter-side contour region (84) the form fit and/or friction fit of the connecting element (6) with the contour (8) is adjusted.

2. The brake disc arrangement of claim 1,
wherein the cross-section of the contour (8) is formed round and/or constant along the longitudinal axis (Z).

3. The brake disc arrangement of claim 1 or 2,
wherein the contour (8) along the longitudinal axis (Z) is limited by the friction ring (2) and/or the mounting adapter (4) such that, in the first state, the connecting element (6) cannot be further displaced within the contour (8) at least in one direction of the longitudinal axis (Z).

4. The brake disc arrangement of any one of the preceding claims,
wherein the friction ring-side (82) and/or the adapter-side contour region (84) has at least one opening region (86), wherein the opening region (86) is configured as an opening in the friction ring (2) and/or in the mounting adapter (4), which opening is formed such that the connecting element (6) in the first state can be guided through said opening and be arranged in the contour (8).

5. The brake disc arrangement of any one of the preceding claims,
wherein the friction ring-side (82) and/or the adapter-side contour region (84) has at least one access region (88), wherein the access region (88) is configured as an opening in the friction ring (2) and/or in the mounting adapter (4), which opening is formed to guide an operative medium and/or a tool to the contour (8) and/or the connecting element (6) so that the connecting element can be formed or shaped.

6. The brake disc arrangement of any one of the preceding claims,
wherein the connecting element (6) is formed as a hollow body having at least one opening, wherein the opening is accessible via the access region (88) in the first state of the connecting element (6).

7. The brake disc arrangement of any one of the preceding claims,
wherein the connecting element (6) is formed as a cylindrical hollow body extending along the longitudinal axis (Z), which hollow body is closed at one side.

8. The brake disc arrangement of any one of the preceding claims,
wherein the wall thickness of the connecting element (6), in sections, is configured differently along the longitudinal axis (Z).

9. The brake disc arrangement of claim 8,
wherein the connecting element (6) is arranged in the contour (8) such that the wall thickness of the connecting element (6) in the friction ring-side contour region (82) is larger than in the adapter-side contour region (84).

10. The brake disc arrangement of any one of the preceding claims,
wherein the connecting element (6) in the second state is accommodated in the friction ring-side (82) or in the adapter-side contour region (84) such that the connecting element (6) is movable along the longitudinal axis (Z) in relation to the friction ring (6) or to the mounting adapter (4).

11. A method of manufacturing a brake disc arrangement for disc brakes, in particular for land vehicles, comprising a friction ring (2), a mounting adapter (4) and at least one connecting element (6), comprising the steps:
- providing the friction ring (2) and the mounting adapter (4), wherein the friction ring (2) and the mounting adapter (4) each have at least one friction ring-side (82) and at least one adapter-side contour region (84), which are suitable to form a common contour (8),
- providing the connecting element (6), wherein the connecting element (6) is in a first state,
- bringing or forming at least one connecting element (6) arranged in the contour (8) into a second state by means of an inner pressure, making use of an access region (88), such that the connecting element (6) is connected to the friction ring-side (82) and/or the adapter-side contour region (84) by form fit or by force fit, wherein an outer diameter of the connecting element (6) in the second state is enlarged relative to the first state perpendicular or transverse to the longitudinal axis (Z), at least in sections, and
wherein due to a wall thickness, which is not constant along the longitudinal axis (Z), and/or different material properties of the connecting element (6) and/or due to a diameter, which is not constant along the longitudinal axis (Z), and/or different inner geometries of the friction ring-side (82) and/or adapter-side contour region (84) the form fit and/or friction fit of the connecting element (6) with the contour (8) is adjusted.

12. The method of claim 11, additionally comprising the steps:
- arranging the friction ring (2) and the mounting adapter (4) relative to each other in a device such that at least one common contour (8) is formed, which extends along the longitudinal axis (Z),
- arranging and displacing the connecting element (6) into the contour (8) via the opening region (86), wherein the connecting element (6) expediently is arranged in the contour (8) such that the wall thickness of the connecting element (6) in the friction ring-side contour region (84) is larger than in the adapter-side contour region (82).

13. The method of claim 11, additionally comprising the steps:
- arranging at least one connecting element (6) in the friction ring-side (82) or in the adapter-side contour region (84),
- arranging the friction ring (2) and the mounting adapter (4) relative to each other in the device such that at least one common contour (8) is formed, which extends along the longitudinal axis (Z),
- displacing the connecting element (6) into the contour (8), wherein expediently the connecting element (6) is arranged in the contour (8) such that the wall thickness of the connecting element (6) in the friction ring-side contour region (84) is larger than in the adapter-side contour region (82).

14. The method of claim 11, additionally comprising the steps:
- arranging the connecting element (6) in the friction ring-side (82) or in the adapter-side contour region (84),
- arranging the friction ring (2) and the mounting adapter (4) relative to each other in the device such that by rotating the friction ring (2) and/or the mounting adapter (4) the contour (8) is formed, wherein expediently the connecting element (6) is arranged in the contour (8) such that the wall thickness of the connecting element (6) in the friction ring-side contour region (84) is larger than in the adapter-side contour region (82) and wherein the connecting element (6) is arranged such that it is no longer possible to rotate the friction ring (2) and the mounting adapter (4) relative to each other.

## Revendications

1. Agencement de disque de frein pour des freins à disques, en particulier pour des véhicules agricoles, comprenant une bague de friction (2),
un adaptateur de raccordement (4) pour raccorder l'agencement de disque de frein à un moyeu de roue,
au moins un élément de liaison (6) pour relier la bague de friction (2) et l'adaptateur de raccordement (4), et
au moins un contour (8) qui présente une zone de contour (82) côté bague de friction et une zone de contour (84) côté adaptateur, par le fait que le contour (8) est formé le long d'un axe longitudinal (Z) par des ressauts dans la bague de friction (2) et dans l'adaptateur de raccordement (4), qui s'étendent transversalement à un axe de rotation (R) de l'agencement de disque de frein,
dans lequel l'élément de liaison (6) peut être amené d'un premier état dans un deuxième état par application d'une pression intérieure dans l'élément de liaison (6),
dans lequel l'élément de liaison (6) est réalisé de telle sorte dans le premier état, il peut être agencé à l'intérieur du contour (8),
dans lequel un diamètre extérieur de l'élément de liaison (6) est agrandi au moins par zones dans le deuxième état transversalement à l'axe longitudinal (Z) par rapport au premier état de telle sorte que l'élément de liaison (6) est relié par coopération de formes et/ou de forces avec la zone de contour (82) côté bague de friction et/ou avec la zone de contour (84) côté adaptateur, et
dans lequel la coopération de formes et/ou de forces de l'élément de liaison (6) avec le contour (8) est réglée par une épaisseur de paroi différente le long de l'axe longitudinal (L) et/ou par des propriétés de matières différentes de l'élément de liaison (6) et/ou par un diamètre différent le long de l'axe longitudinal (L) et/ou par une géométrie intérieure différente de la zone de contour (82) côté bague de friction et/ou de la zone de contour (84) côté adaptateur.

2. Agencement de disque de frein selon la revendication 1, dans lequel la section transversale du contour (8) est réalisée ronde et/ou constante le long de l'axe longitudinal (Z).

3. Agencement de disque de frein selon la revendication 1 ou 2, dans lequel le contour (8) le long de l'axe longitudinal (Z) est limité par la bague de friction (2) et/ou par l'adaptateur de raccordement (4) de telle sorte que l'élément de liaison (6) ne peut pas être déplacé plus à l'intérieur du contour (8) dans le premier état au moins dans une direction de l'axe longitudinal (Z).

4. Agencement de disque de frein selon l'une des revendications précédentes, dans lequel la zone de contour (82) côté bague de friction et/ou la zone de contour (84) côté adaptateur présente au moins une zone d'ouverture (86), la zone d'ouverture (86) étant réalisée sous forme d'ouverture dans la bague de friction (2) et/ou dans l'adaptateur de raccordement (4), qui est formée de telle sorte que l'élément de liaison (6) peut, dans le premier état, être guidé à travers cette ouverture et agencé dans le contour (8).

5. Agencement de disque de frein selon l'une des revendications précédentes, dans lequel la zone de contour (82) côté bague de friction et/ou la zone de contour (84) côté adaptateur présente au moins une zone d'accès (88), la zone d'accès (88) étant réalisée sous forme d'ouverture dans la bague de friction (2) et/ou dans l'adaptateur de raccordement (4), qui est formée pour guider un agent actif et/ou un outil vers le contour (8) et/ou l'élément de liaison (16), de telle sorte que l'élément de liaison (6) peut être déformé.

6. Agencement de disque de frein selon l'une des revendications précédentes, dans lequel l'élément de liaison (6) est réalisé sous forme de corps creux avec au moins une ouverture, l'ouverture étant accessible par l'intermédiaire de la zone d'accès (88) dans le premier état de l'élément de liaison (6).

7. Agencement de disque de frein selon l'une des revendications précédentes, dans lequel l'élément de liaison (6) est réalisé sous forme de corps creux cylindrique s'étendant le long de l'axe longitudinal (Z), lequel est fermé sur un côté.

8. Agencement de disque de frein selon l'une des revendications précédentes, dans lequel l'épaisseur de paroi de l'élément de liaison (6) est réalisée différente par zones le long de l'axe longitudinal (Z).

9. Agencement de disque de frein selon la revendication 8, dans lequel l'élément de liaison (6) est agencé de telle sorte dans le contour (8) que l'épaisseur de paroi de l'élément de liaison (6) dans la zone de contour (82) côté bague de friction est plus grande que dans la zone de contour (84) côté adaptateur.

10. Agencement de disque de frein selon l'une des revendications précédentes, dans lequel l'élément de liaison (6) dans le deuxième état est reçu de telle sorte dans la zone de contour (82) côté bague de friction ou la zone de contour (84) côté adaptateur que l'élément de liaison (6) est mobile le long de l'axe longitudinal (Z) en relation avec la bague de friction (2) ou avec l'adaptateur de raccordement (4).

11. Procédé de fabrication d'un agencement de disque de frein pour des freins à disques, en particulier pour des véhicules agricoles, comprenant une bague de friction (2), un adaptateur de raccordement (4) et au moins un élément de liaison (6), comportant les étapes suivantes :
- fourniture de la bague de friction (2) et de l'adaptateur de raccordement (4), la bague de friction (2) et l'adaptateur de raccordement (4) présentant chacun au moins une zone de contour (82) côté bague de friction et au moins une zone de contour (84) côté adaptateur qui sont appropriées pour former un contour (8) commun,
- fourniture de l'élément de liaison (6), l'élément de liaison (6) se trouvant dans un premier état,
- déformation d'au moins un élément de liaison (6) agencé dans le contour (8) dans un deuxième état par l'intermédiaire d'une pression intérieure en utilisant une zone d'accès (88) de telle sorte que l'élément de liaison (6) est relié par coopération de formes et/ou de forces avec la zone de contour (82) côté bague de friction et/ou la zone de contour (84) côté adaptateur, un diamètre extérieur de l'élément de liaison (6) étant agrandi dans le deuxième état par rapport au premier état, au moins par zones transversalement à l'axe longitudinal (Z), et
dans lequel la coopération de formes et/ou de forces de l'élément de liaison (6) avec le contour (8) est réglée par une épaisseur de paroi différente le long de l'axe longitudinal (L) et/ou par des propriétés de matières différentes de l'élément de liaison (6) et/ou par un diamètre différent le long de l'axe longitudinal (L) et/ou par une géométrie intérieure différente de la zone de contour (82) côté bague de friction et/ou de la zone de contour (84) côté adaptateur.

12. Procédé selon la revendication 11, comprenant en outre les étapes suivantes :
- on agence la bague de friction (2) et l'adaptateur de raccordement (4) l'un par rapport à l'autre dans un dispositif de telle sorte qu'il est formé au moins un contour (8) commun qui s'étend le long de l'axe longitudinal (Z),
- on agence et déplace l'élément de liaison (6) dans le contour (8) par l'intermédiaire de la zone d'ouverture (86), l'élément de liaison (6) étant agencé judicieusement de telle sorte dans le contour (8) que l'épaisseur de paroi de l'élément de liaison (6) est plus grande dans la zone de contour (82) côté bague de friction que dans la zone de contour (84) côté adaptateur.

13. Procédé selon la revendication 11, comprenant en outre les étapes suivantes :
- on agence au moins un élément de liaison (6) dans la zone de contour (82) côté bague de friction ou dans la zone de contour (84) côté adaptateur,
- on agence la bague de friction (2) et l'adaptateur de raccordement (4) l'un par rapport à l'autre dans le dispositif de telle sorte qu'il est formé au moins un contour (8) commun qui s'étend le long de l'axe longitudinal (Z),
- on déplace l'élément de liaison (6) dans le contour (8), l'élément de liaison (6) étant judicieusement agencé dans le contour (8) de telle sorte que l'épaisseur de paroi de l'élément de liaison (6) est plus grande dans la zone de contour (82) côté bague de friction que dans la zone de contour (84) côté adaptateur.

14. Procédé selon la revendication 11, comprenant en outre les étapes suivantes :
- on agence l'élément de liaison (6) dans la zone de contour (82) côté bague de friction ou dans la zone de contour (84) côté adaptateur,
- on agence la bague de friction (2) et l'adaptateur de raccordement (4) l'un par rapport à l'autre dans le dispositif de telle sorte que le contour (8) est formé par rotation de la bague de friction (2) et/ou de l'adaptateur de raccordement (4), l'élément de liaison (6) étant judicieusement agencé dans le contour (8) de telle sorte que l'épaisseur de paroi de l'élément de liaison (6) est plus grande dans la zone de contour (82) côté bague de friction que dans la zone de contour (84) côté adaptateur, et l'agencement de l'élément de liaison (6) étant effectué de telle sorte qu'une rotation de la bague de friction (2) et de l'adaptateur de raccordement (4) l'une par rapport à l'autre n'est plus possible.
